# EUROPEAN PATENT SPECIFICATION

(11) **EP 4 543 089 B1**
(45) Date of publication and mention of the grant of the patent: **15.10.2025**
(21) Application number: 23203698.8
(22) Date of filing: 16.10.2023
(51) Int. Cl.: H04W 40/08, H04W 40/10, H04B 7/00, H04W 52/02

(54) **METHOD FOR TRANSMITTING AND/OR USING A USER EQUIPMENT ROUTE SELECTION POLICY INFORMATION WHEN OPERATING A USER EQUIPMENT OR WHEN OPERATING A USER EQUIPMENT CONNECTED TO A TELECOMMUNICATIONS NETWORK, USER EQUIPMENT, SYSTEM OR TELECOMMUNICATIONS NETWORK, PROGRAM AND COMPUTER PROGRAM PRODUCT**
VERFAHREN ZUM SENDEN UND/ODER VERWENDEN VON BENUTZER- UND ROUTENAUSWAHLRICHTLINIEN
PROCÉDÉ DE TRANSMISSION ET/OU D'UTILISATION D'INFORMATIONS DE POLITIQUE DE SÉLECTION D'ITINÉRAIRE D'UN ÉQUIPEMENT UTILISATEUR

(43) Date of publication of application: 23.04.2025
(73) Proprietor: Deutsche Telekom AG, 53113 Bonn (DE)
(72) Inventor: COLOM IKUNO, Josep, 2100 Korneuburg (AT); LAUSTER, Reinhard, 3100 St. Pölten (AT)
(74) Representative: Schwöbel, Thilo K.

(56) References cited:
- EP-A1- 4 224 910
- US-A1- 2008 037 499
- US-A1- 2015 195 187

## Description

### BACKGROUND

The present invention relates a method for transmitting and/or using a user equipment route selection policy information when operating a user equipment or when operating a user equipment connected to a telecommunications network, wherein the user equipment comprises or is able to access or to obtain energy-related information.

Furthermore, the present invention relates to a user equipment for receiving and/or using a user equipment route selection policy information when being operated, or when being operated in connection to a telecommunications network, wherein the user equipment comprises or is able to access or to obtain energy-related information.

Additionally, the present invention relates to a system or to a telecommunications network for transmitting and/or using a user equipment route selection policy information when operating a user equipment or when operating a user equipment connected to a telecommunications network,
wherein the user equipment comprises or is able to access or to obtain energy-related information.

Furthermore, the present invention relates to a program and to a computer-readable medium for transmitting and/or using a user equipment route selection policy information according to the inventive method.

In conventionally known telecommunications networks, in case that uplink traffic needs to be steered, a 5G mobile communication network or 5G system also defines user equipment route selection policies (or UE Route Selection Policies, URSPs) - especially in contrast to 4G and prior mobile communication systems. User equipment route selection policies allow the network to mandate the user equipment a set of rules on how to route data packets (especially allow the network to deploy routing logic in the user equipment) such that specific traffic can be routed towards specific PDU sessions based on criteria specified by the network, especially the home network (of the user equipment).

However, in conventionally known telecommunications networks, it is currently not possible to consider energy-related criteria, especially sustainability-related criteria, regarding the manner how the user equipment routes traffic via user equipment route selection policy rules. Other prior-art methods for transmitting or using user equipment route selection policy URSP information are disclosed in the patent publications EP4224910A1, US2008/037499A1 and US2015/195187A1.

### SUMMARY

An object of the present invention is to provide a technically simple, effective and cost effective solution for transmitting and/or using a user equipment route selection policy information when operating a user equipment or when operating a user equipment connected to a telecommunications network, especially in a manner such that energy-related and/or energy consumption-related and/or energy production-related aspects are able to be taken into consideration when using and/or applying user equipment route selection policy rules or user equipment route selection policy information, i.e. in the framework of using user equipment route selection policy rules and/or embedded in their use. A further object of the present invention is to provide a corresponding user equipment, a corresponding system or a corresponding telecommunications network, and a corresponding program and computer-readable medium.

The object of the present invention is achieved by a method for transmitting and/or using a user equipment route selection policy information when operating a user equipment or when operating a user equipment connected to a telecommunications network,
wherein the user equipment is able to access or to obtain energy-related information which is associated to networks, cells, frequencies and/or slices via mappings, and wherein the user equipment route selection policy information comprises an energy-related information element, wherein, in order to transmit and/or to use a specific user equipment route selection policy information, the method comprises the following steps: in a first step, the user equipment comprises or receives the specific user equipment route selection policy information to be evaluated, wherein the specific user equipment route selection policy information comprises a specific energy-related information element which is part of a specific user equipment route selection policy rule, in a second step, the specific user equipment route selection policy information is either applied or not applied, by the user equipment, depending on whether the specific energy-related information element of the specific user equipment route selection policy information corresponds to the energy-related information or not, and, if applied, the specific user equipment route selection policy rule contents are combined with the mappings.

According to the present invention, it is advantageously possible that energy-related and/or energy consumption-related and/or energy production-related aspects are able to be taken into consideration when using and/or applying user equipment route selection policy rules or user equipment route selection policy information.
Hence, it is advantageously possible, according to the present invention, that the user equipment (and/or its user) is able to implement (or mandated, by the serving network and/or by the home network, to implement) a behavior - regarding data transmission (tasks or data transmission amounts or volumes of data to be transmitted) or regarding in which manner or by means of which route (or via which entity or network node) such data (amounts or volumes) are actually transmitted - that takes energy-related (and/or energy consumption-related and/or energy production-related) aspects (regarding energy used (by entities or network nodes) to actually perform the respective data transmission) into account, especially in a manner such that - regarding such data transmission - certain classes or ranges of energy-related (and/or energy consumption-related and/or energy production-related) values are fulfilled or respected, especially fulfilled or respected in a verifiable or provable manner.

Hence, according to the present invention, it is advantageously possible - contrary to the situation in conventionally known telecommunications networks or mobile communication networks - to consider energy-related criteria, especially sustainability-related criteria, especially regarding to how the respective user equipments route traffic via user equipment route selection policy rules.

Especially according to the present invention, it is advantageously possible to realize this by means of extending the concept of user equipment route selection policy traffic categories, especially in at least one of the following ways:
-- by means of enhancing user equipment route selection policy rules to consider energy-related criteria in the route selection descriptor (or routing selection descriptor), RSD;
-- by means allowing the user equipment to indicate energy-related criteria in the information it provides the user equipment route selection policy rule (e.g. via connection capabilities);
-- by means of allowing the user equipment to use information - retrieved from the network - associated to a given application traffic to a specific user equipment route selection policy rule based on energy-related criteria.

Hence, according to the present invention, it is advantageously possible to realize more granularity when applying user equipment route selection policy rules based on traffic categories while avoiding the issues with using explicit application identifiers, resulting in a more flexible application of slicing in the user equipment.

According to the present invention, one user equipment route selection policy rule or a plurality of user equipment route selection policy rules (i.e. terms that are used, in the context of the present invention, synonymously with the term user equipment route selection policy information) are used when a considered user equipment is operated, especially operated when it is connected to a telecommunications network or mobile communication network.

According to the present invention, the user equipment either already comprises energy-related information (or information that is able to be related to energy-related information)
- or the user equipment is able to access or to obtain such energy-related information (or information that is able to be related to energy-related information).

According to the present invention, the user equipment route selection policy information comprises an energy-related information element, and, in order to transmit and/or to use a specific user equipment route selection policy information, the method comprises the following steps:
-- in a first step, the user equipment comprises or receives the specific user equipment route selection policy information to be evaluated, wherein the specific user equipment route selection policy information comprises or is associated to a specific energy-related information element,
-- in a second step, the specific user equipment route selection policy information is either applied or not applied, by the user equipment, depending on whether the specific energy-related information element of the specific user equipment route selection policy information corresponds to the energy-related information or not.

It is thereby advantageously possible, according to the present invention, that the application of the specific user equipment route selection policy information or rule depends on the specific energy-related information element (of the specific user equipment route selection policy information) and whether it corresponds to, or matches, the energy-related information.

While it might be known, in conventionally known telecommunications networks, to transmit energy-related information to a network node (and, e.g., also to a user equipment in the context of a mobile communication network), especially relating to IP routing, this is not known in the context of user equipment route selection policy rules. I.e., regardless of how an energy-related information of other networks might be transmitted to a user equipment, the method according to the present invention focuses on the steering of the user equipment route selection policy rules, for which additional routing and/or traffic descriptors are proposed. Especially, the present invention does not necessarily and directly relate solely to information characterizing a network, but - rather - to the application of such information to evaluate user equipment route selection policy rules, detect and route traffic via a user equipment route selection policy-capable user equipment.

In general terms, IP routing (or similar routing) might be known to be based on energy-related criteria. However, while user equipment route selection policy rules contain the word "routing" in its name, a more appropriate short description would be that of "a 5G feature for associating application traffic in a user equipment to one or more PDU sessions". The use of user equipment route selection policy rules relate to functionality to match newly-detected application traffic to traffic-related (e.g. an IP address), application-related (i.e. regarding an application ID or identifier), requested connection capabilities traffic descriptors, user equipment-related (e.g. regarding the network the user equipment is attached to) and based on a generic validity criteria (user equipment route selection policy rules can contain route selection validation criteria, such as a time validity when a user equipment route selection policy rule is valid). The user equipment route selection policy rules are steered by the policy control function (PCF) and allows the PCF to instruct the user equipment to apply user equipment policies, as well as under what circumstances. This method of traffic steering is indeed quite different to classical packet routing, as it would be unsuitable to just apply any (generic) routing mechanism to user equipment route selection policy rules. In this respect, it is especially important that the traffic descriptor structure is quite complex, as well as the combination with an also quite complex route selection descriptor and route selection validation criteria which correspond to examples of aspects that are not possible to realize with methods based purely on traffic routing, such as:
-- centrally-steered conditional validity of traffic routing,
-- use of information that is not contained in the data packets (e.g. application ID, connection capabilities) to be transmitted,
-- routing not based on interfaces or IP addresses (cf. the full spectrum of route selection descriptors),
-- association of user equipment route selection policy rules to a specific user equipment via the use of user equipment policies
-- secure association between the user equipment route selection policy rule signaling and the non-access stratum connection via the access and mobility management function, AMF,
-- reuse of the current policy framework in use in mobile networks, especially user equipment policies, to support energy-related information.

Additionally, information contained in the non-access stratum container in which a user equipment route selection policy rule is sent is taken into account by the user equipment. An example being that of the authorization of the policy control function, which is implicitly realized by the non-access stratum security context. Hence, the applicability of a given user equipment route selection policy rule can also be related to information not only contained within the user equipment route selection policy rule but also to information associated and/or mapped to the user equipment route selection policy rule, e.g. a network identifier contained or associated with the non-access stratum message containing the user equipment route selection policy rule.

Typically, the telecommunications network comprises an access network and a core network; however, the present invention is also related to situations where the telecommunications network does not comprise, strictly speaking, both an access network and a core network, but where the telecommunications network is only associated or assigned to an access network (and especially comprises the core network), or where the telecommunications network is only associated or assigned to a core network (and especially comprise the access network), or where the telecommunications network is only associated or assigned to both an access network and a core network. According to the present invention, the core network especially provides the user equipment with data connectivity towards a data network.

According to the present invention, a user equipment is especially considered that is connected to a telecommunications network, and the telecommunications network comprises a core network that comprises a policy and charging function. The policy and charging function is typically configured to transmit user equipment route selection policy information to the user equipment.

In conventionally known telecommunications networks as well as according to the present invention, the user equipment typically communicates with the access network (or radio access network) via an interface, typically a radio interface or air interface. This is used for conveying both signaling information (typically referred to as the control plane) and data traffic (typically referred to as the user plane), but there is typically a logical separation (logical channels) for the transport of both types of traffic. Likewise, between the access network (especially the radio access network, and especially a gNB base station entity) and the core network, signaling information and user data are typically separated.

In order to establish a data connection enabling a user equipment to communicate with a data network (or with the core network), a protocol data unit (PDU) session is typically required. A protocol data unit session is a logical data transport channel typically terminated at the core network that provides connectivity to a data network. A protocol data unit session can have one or more associated quality-of-service levels or flows for the underlying transported data (e.g. one or more quality-of-service flows within the PDU session). The protocol data unit session establishment is performed by the user equipment via the radio interface; the radio access network is aware of protocol data unit sessions (it needs the information to e.g. do physical resource allocation on the Uu reference point between the base station entity (especially gNB) and the user equipment) but the protocol data unit session is managed by the core network. Currently, distinct protocol data unit sessions are regarded as independent, i.e. a protocol data unit session establishment is not linked to other protocol data unit session establishment requests.

In currently known telecommunications networks as well as according to the present invention, user equipment route selection policy information or user equipment route selection policy rules is/are used by the telecommunications network to oblige user equipments to use a set of rules to apply to, or steer, uplink traffic, i.e. how to route data packets. Especially such user equipment route selection policy rules normally indicate or mandate the user equipment to steer specific traffic to a given, or predetermined, protocol data unit session. Especially such user equipment route selection policy rules or such user equipment route selection policy information is set or defined by the core network of the telecommunications network, i.e. the telecommunications network (or the core network thereof) sets a user equipment route selection policy rule or user equipment route selection policy information by means of transmitting a corresponding message to the user equipment as part of the control data flow exchange between the telecommunications network and the user equipment over the air interface between the user equipment and the corresponding access network element, typically a base station entity such as, e.g., a gNodeB entity. As a consequence of the user equipment receiving such a user equipment route selection policy rule (or plurality thereof) or user equipment route selection policy information, the user equipment is able to apply (or will apply) such rule information, i.e. traffic, especially application traffic (in uplink direction, towards the telecommunications network) that matches the corresponding user equipment route selection policy rule or user equipment route selection policy information is able to be routed (or is routed), by the user equipment, as mandated or prescribed by the user equipment route selection policy rule / information - but according to the present invention, the user equipment (or its user equipment route selection policy functionality) is also able to refuse to apply a considered user equipment route selection policy rule in case that the specific energy-related information element (of the specific user equipment route selection policy rule or information) does not correspond to, or matches, the energy-related information.

In currently known telecommunications networks, the user equipment route selection policy rules or user equipment route selection policy information itself, i.e. especially its structure, is functionally defined in 3GPP TS 23.503 and is a set of one or more user equipment route selection policy rules, where a user equipment route selection policy rule is generally composed of: a precedence value, a traffic descriptor, one or more route selection descriptors as well as validity criteria (e.g. time and/or location when a user equipment route selection policy rule applies), wherein the validity criteria are typically part of the route selection descriptors.

The precedence value of the user equipment route selection policy rule identifies the precedence of the considered user equipment route selection policy rule among all the existing user equipment route selection policy rules (either already present at the user equipment or transmitted as part of the user equipment route selection policy information).

The traffic descriptor includes either a match-all traffic descriptor, or at least one of the following components: one or more application identifiers, one or more IP 3 tuples as defined in 3GPP TS 23.503, i.e. the destination IP address, the destination port number, and the protocol in use above the IP, one or more non-IP descriptors, i.e. destination information of non-IP traffic, one or more DNNs (data network name), one or more connection capabilities, one or more domain descriptors, i.e. destination FQDN(s) (fully qualified domain name(s)).

Each route selection descriptor consists of a precedence value of the route selection descriptor and either a non-seamless non-3GPP offload indication, or one PDU session type and, optionally, one or more of the following: SSC mode (session and service continuity mode), one or more S-NSSAls (Single Network Slice Selection Assistance Information), one or more DNNs, a preferred access type, a multi-access preference, a time window, and location criteria.

In this context, the time window indication and the location criteria are part of the route selection descriptor even though they do not actually describe the traffic routing but, rather, correspond to route selection validation criteria: a given or considered route selection descriptor is not considered valid unless all the provided validation criteria are met and controls the validity of said element.

Regarding the application of user equipment route selection policy rules or user equipment route selection policy information, for every newly detected application (i.e. requiring an uplink data stream to be transmitted by the user equipment), the user equipment evaluates the available (i.e. stored or received) user equipment route selection policy rules in the order of rule precedence and determines if the application is matching the traffic descriptor of any URSP rule; when a URSP rule is determined to be applicable for a given application, the user equipment routes the traffic of the application according to the route selection descriptor of this URSP rule.

According to the present invention, it is advantageously possible and preferred that - in the second step - the specific user equipment route selection policy information is able to be applied in case that the specific energy-related information element corresponds to the energy-related information of the user equipment, and wherein the specific user equipment route selection policy information is not applied in case that the specific energy-related information element does not correspond to the energy-related information of the user equipment.

It is thereby advantageously possible to realize and implement the inventive method in a comparatively simple and efficient manner.

According to the present invention, it is furthermore advantageously possible and preferred that the energy-related information and/or the energy-related information element relates to or indicates at least one of the following:
-- a threshold or a range of values or a label regarding the amount or relative amount of the available energy or energy efficiency of the user equipment or of a device being locally connected or associated to the user equipment,
-- a threshold or a range of values or a label regarding the amount or relative amount of the energy available to a base station entity or a radio cell of the telecommunications network, which base station entity or radio cell is potentially able to serve the user equipment,
-- a threshold or a range of values or a label regarding energy costs, especially energy costs to the user or to the user equipment, especially regarding a surcharge to use a specific radio cell or being a charging indicator or a cost label,
-- a threshold or a range of values or a label regarding the energy intensity or efficiency of a data transmission,
-- a threshold or a range of values or a label regarding the kind or the category of energy generation used, especially whether the energy used is generated renewably and/or whether a certain energy generation technology is used and/or whether a certain maximum threshold or a certain range of values of greenhouse gas emissions is respected.

It is thereby advantageously possible to realize and implement the inventive method in a comparatively simple and efficient manner.

Furthermore, it is advantageously possible and preferred according to the present invention that the specific user equipment route selection policy information comprises the specific energy-related information element according to at least one out of the following:
-- a traffic descriptor,
-- a route selection descriptor,
-- a route selection validation criteria,
-- as an energy-related information element.

It is thereby advantageously possible to efficiently realize and implement the inventive method in a comparatively simple and efficient manner.

Furthermore, it is advantageously possible and preferred according to the present invention that the specific user equipment route selection policy information comprises at least one specific user equipment route selection policy rule, wherein the specific energy-related information element is part of the specific user equipment route selection policy rule, especially according to at least one out of the following:
-- the specific energy-related information element is part of the specific user equipment route selection policy rule as part of at least one specific route selection descriptor thereof, and especially besides a precedence value, a traffic descriptor and/or at least one further route selection descriptor,
-- the specific energy-related information element is part of the specific user equipment route selection policy rule as part of at least one specific traffic descriptor thereof - especially as part of the, or one of the, connection capabilities information element of the specific traffic descriptor -, and especially besides a precedence value, a route selection descriptor and/or at least one further traffic descriptor.

It is thereby advantageously possible to realize and implement the inventive method in a comparatively simple and efficient manner.

Furthermore, it is advantageously possible and preferred according to the present invention that the method further comprises the step of - especially prior to or during the first step - the user equipment comprising or receiving the energy-related information, wherein the energy-related information especially comprises a mapping information,
wherein especially the energy-related information is sent, to the user equipment, using a secure channel, especially within a non-access stratum message and/or a container within.

It is thereby advantageously possible to realize and implement the inventive method in a comparatively simple and efficient manner.

Furthermore, it is advantageously possible and preferred according to the present invention that the specific energy-related information element and/or the energy-related information is transmitted, to the user equipment, using at least one out of the following mechanisms or possibilities:
-- transmission via, or using, radio cell broadcast, especially via a broadcast control channel, especially using a system information block,
-- transmission via, or using, access stratum signaling from an access network serving the user equipment and/or via, or using, radio resource control signaling,
-- transmission via, or using, non-access stratum signaling from the core network of, or serving, the user equipment, wherein especially the transmission via, or using, non-access stratum signaling uses an access and mobility container and/or a closed access group information and/or a dedicated non-access stratum message and/or a user equipment configuration update procedure and/or a user equipment parameter update procedure and/or a steering of roaming procedure.

It is thereby advantageously possible to realize and implement the inventive method in a comparatively simple and efficient manner.

Furthermore, the present invention relates to a user equipment for receiving and/or using a user equipment route selection policy information when being operated, or when being operated in connection to a telecommunications network,
wherein the user equipment is able to access or to obtain energy-related information which is associated to networks, cells, frequencies and/or slices via mappings, and wherein the user equipment route selection policy information comprises an energy-related information element, wherein, in order to transmit and/or to use a specific user equipment route selection policy information, the method comprises the following steps: in a first step, the user equipment comprises or receives the specific user equipment route selection policy information to be evaluated, wherein the specific user equipment route selection policy information comprises a specific energy-related information element which is part of a specific user equipment route selection policy rule, in a second step, the specific user equipment route selection policy information is either applied or not applied, by the user equipment, depending on whether the specific energy-related information element of the specific user equipment route selection policy information corresponds to the energy-related information or not, and, if applied, the specific user equipment route selection policy rule contents are combined with the mappings.

Furthermore, the present invention relates to a system or to a telecommunications network for transmitting and/or using a user equipment route selection policy information when operating a user equipment or when operating a user equipment connected to a telecommunications network,
wherein the user equipment is able to access or to obtain energy-related information which is associated to networks, cells, frequencies and/or slices via mappings, and wherein the user equipment route selection policy information comprises an energy-related information element, wherein, in order to transmit and/or to use a specific user equipment route selection policy information, the method comprises the following steps: in a first step, the user equipment comprises or receives the specific user equipment route selection policy information to be evaluated, wherein the specific user equipment route selection policy information comprises a specific energy-related information element which is part of a specific user equipment route selection policy rule, in a second step, the specific user equipment route selection policy information is either applied or not applied, by the user equipment, depending on whether the specific energy-related information element of the specific user equipment route selection policy information corresponds to the energy-related information or not, and, if applied, the specific user equipment route selection policy rule contents are combined with the mappings.

Additionally, the present invention relates to a program comprising a computer readable program code which, when executed on a computer and/or on a user equipment and/or on a network node of a telecommunications network, or in part on the user equipment and/or in part on the network node of a telecommunications network, causes the computer and/or the user equipment and/or the network node of a telecommunications network to perform the inventive method.

Additionally, the present invention relates to a computer-readable medium comprising instructions which when executed on a computer and/or on a user equipment and/or on a network node of a telecommunications network, or in part on the user equipment and/or in part on the network node of a telecommunications network, causes the computer and/or the user equipment and/or the network node of a telecommunications network to perform the inventive method.

These and other characteristics, features and advantages of the present invention will become apparent from the following detailed description, taken in conjunction with the accompanying drawings, which illustrate, by way of example, the principles of the invention. The description is given for the sake of example only, without limiting the scope of the invention. The reference figures quoted below refer to the attached drawings.

### BRIEF DESCRIPTION OF THE DRAWINGS

Figure 1 schematically illustrates a telecommunications network comprising an access network, a core network and a user equipment, wherein the core network typically comprises a number of network functions or services, such as a policy and charging function, the policy and charging function typically being configured to transmit user equipment route selection policy information to the user equipment.
Figure 2 schematically illustrates the transmission of user equipment route selection policy information towards the user equipment.
Figure 3 schematically illustrates an embodiment of the structure of a user equipment route selection policy information according to the present invention.
Figure 4 schematically illustrates another embodiment of the structure of a user equipment route selection policy information according to the present invention.

### DETAILED DESCRIPTION

The present invention will be described with respect to particular embodiments and with reference to certain drawings, but the invention is not limited thereto but only by the claims. The drawings described are only schematic and are nonlimiting. In the drawings, the size of some of the elements may be exaggerated and not drawn on scale for illustrative purposes.

Where an indefinite or definite article is used when referring to a singular noun, e.g. "a", "an", "the", this includes a plural of that noun unless something else is specifically stated.

Furthermore, the terms first, second, third and the like in the description and in the claims are used for distinguishing between similar elements and not necessarily for describing a sequential or chronological order. It is to be understood that the terms so used are interchangeable under appropriate circumstances and that the embodiments of the invention described herein are capable of operation in other sequences than described or illustrated herein.

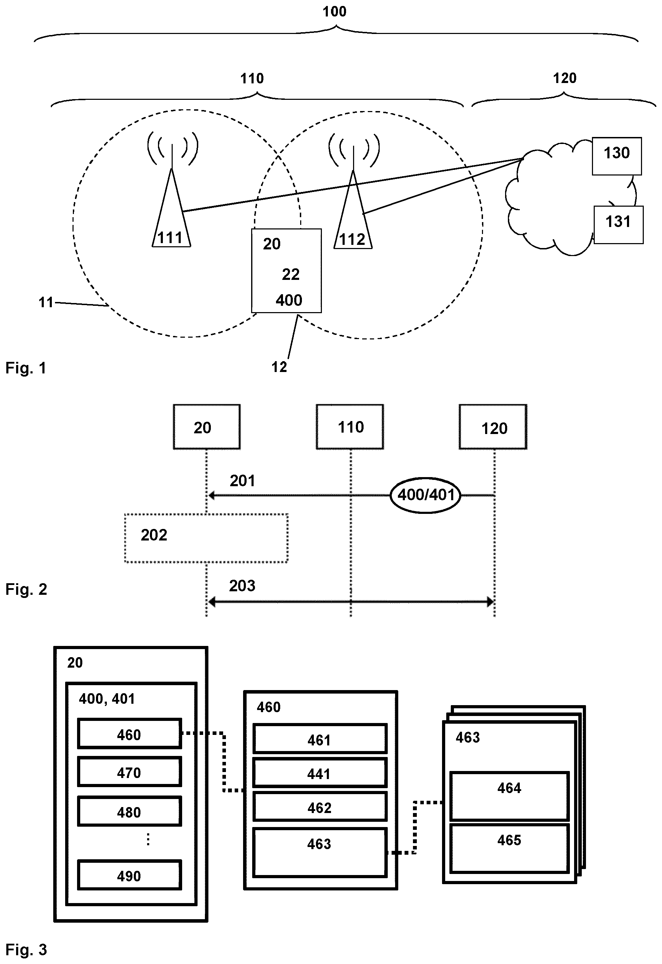

In Figure 1, a telecommunications network 100 comprising an access network 110, and a core network 120 is schematically shown. The access network 110 comprises a plurality of radio cells 11, 12. In the exemplary situation or scenario shown in Figure 1, a first base station entity 111 generates or is associated with or spans the first radio cell 11, and a second base station entity 112 generates or is associated with or spans the second radio cell 12. A user equipment 20 is schematically shown, and the user equipment 20 comprises user equipment route selection policy information 400 (i.e. a user equipment route selection policy rule or a plurality of user equipment route selection policy rules). Furthermore, the user equipment 20 comprises (or is able to access or to obtain) energy-related information 22.

The user equipment 20 is typically, but not necessarily, mobile i.e. able to move with respect to the (typically, but not necessarily static) radio cells 11, 12 or corresponding base station entities 111, 112 of the access network 110. In the exemplarily represented illustration of Figure 1, the core network 120 comprises or is connected to a data network 130. The core network 120 provides the user equipment 20 with data connectivity towards the data network 130. The telecommunications network 100, especially the core network 120, typically comprises a number of network functions or services, such as a policy and charging function 131, the policy and charging function 131 typically being configured to transmit user equipment route selection policy information 400 to the user equipment 20.

In Figure 2, the transmission of user equipment route selection policy information 400 (or of a specific user equipment route selection policy information 401) towards the user equipment 20 is schematically shown by means of a communication diagram between the user equipment 20, the access network 110, and the core network 120. According to the present invention, user equipment route selection policy information 400 is (or user equipment route selection policy rules 400 are) used by the telecommunications network 100 to oblige the user equipment 20 to use a set of rules to apply to, or steer, uplink traffic, i.e. how to route data packets are routed towards the core network 120 and/or towards a data network 130. Especially, such user equipment route selection policy information or rules 400 (or such specific user equipment route selection policy information or rules 401) indicate or mandate the user equipment 20 to steer specific traffic to a given, or predetermined, PDU (protocol data unit) session. Especially such (specific) user equipment route selection policy rules or information 400 or 401 is set or defined by the core network 120 of the telecommunications network 100, i.e. the telecommunications network 100 (or the core network 120 thereof) sets the (considered) specific user equipment route selection policy rule or information 401 by means of transmitting (during or using a first processing step 201) a corresponding message to the user equipment 20, especially as part of the control data flow exchange (control plane) between the telecommunications network 100 and the user equipment 20 over the air interface between the user equipment 20 and the corresponding access network element, typically a base station entity 111, 112 such as, e.g., a gNodeB entity. As a consequence of the user equipment 20 receiving the specific user equipment route selection policy rule (or the plurality thereof) 401 or specific user equipment route selection policy information 401, the user equipment 20 applies such rule or information (during a second processing step 202), i.e. traffic, especially application traffic (in uplink direction, towards the telecommunications network 100) that matches the corresponding (specific) user equipment route selection policy rule or information 400, 401 is routed (in or during a third processing step 203), by the user equipment 20, as mandated or prescribed by this (specific) user equipment route selection policy rule / information 400, 401.

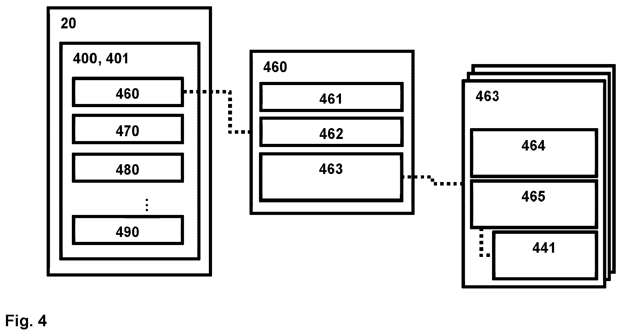

According to the present invention, it is understood that pieces of user equipment route selection policy information 400 (i.e. user equipment route selection policy rule(s)) themselves, i.e. especially their structure, is defined in a manner such as to comprise an energy-related information element. With regard to the considered specific user equipment route selection policy information 401, such specific user equipment route selection policy information 401 comprises or is associated to a specific energy-related information element which is designated by means of reference sign 441. Figures 3 and 4 schematically show different exemplary embodiments of the possible structure of a user equipment route selection policy information 400 (or, rather, of a considered specific user equipment route selection policy information 401) according to the present invention, wherein the exemplary representation of Figures 3 and 4 shows the (specific) user equipment route selection policy information 400, 401 to comprise a plurality of user equipment route selection policy rules 460, 470, 480, 490 (i.e. a first user equipment route selection policy rule 460, a second user equipment route selection policy rule 470, a third user equipment route selection policy rule 480, and a fifth user equipment route selection policy rule 490), and wherein, for the sake of simplicity, the structure of only one of these rules (namely user equipment route selection policy rule 460 or first user equipment route selection policy rule 460) is schematically shown; however, it is understood that the other user equipment route selection policy rules 470, 480, 490 are able to be similarly structured.

According to one preferred embodiment of the present invention, exemplarily shown in Figure 3, the energy-related information element 441 of the (first) user equipment route selection policy rule 460 is a part thereof besides a precedence value 461, a traffic descriptor 462 and at least one route selection descriptor (list) 463, i.e. (first) user equipment route selection policy rule 460 comprises the specific energy-related information element 441 besides the (or its) precedence value 461, the (or its) traffic descriptor 462 and at least one route selection descriptor (list) 463. In the exemplary representation of Figure 3, the route selection descriptor (list) 463 furthermore comprises route selection components 464, and route selection validation criteria 465.

According to another preferred embodiment of the present invention, exemplarily shown in Figure 4, again the (first) user equipment route selection policy rule 460 comprises a precedence value 461, a traffic descriptor 462 and at least one route selection descriptor (list) 463, wherein the access mode-related validity element 441 of the (first) user equipment route selection policy rule 460 is a part of such at least one route selection descriptor (list) 463, i.e. the user equipment route selection policy rule 460 comprises the specific access mode-related validity element 441 as part of the at least one route selection descriptor (list) 463, and either besides the route selection components 464 as well as the route selection validation criteria 465, or as part of the route selection validation criteria 465 (as it is schematically shown in Figure 4).

According to the present invention, the (specific) user equipment route selection policy information 400, 401 might comprise either one user equipment route selection policy rule 460 or a plurality of user equipment route selection policy rules 460, 470, 480, 490. In any case, according to the present invention, the specific energy-related information element 441 is preferably part of the one (i.e. only) user equipment route selection policy rule 460 (of the (specific) user equipment route selection policy information 400, 401) or, in case of a plurality of user equipment route selection policy rules 460, 470, 480, 490 present (in the (specific) user equipment route selection policy information 400, 401), the specific energy-related information element 441 is part of one of these user equipment route selection policy rules 460, 470, 480, 490; alternatively, the specific energy-related information element 441 is part of more than one of these user equipment route selection policy rules 460, 470, 480, 490 (or, alternatively, a plurality of specific energy-related information elements 441 is/are part of such user equipment route selection policy rules 460, 470, 480, 490). Both in case of either one user equipment route selection policy rule being present as part of the (specific) user equipment route selection policy element 400, 401 or in case of more than one rule being present, the (specific) energy-related information element 441 is especially part of at least one route selection descriptor (list) 463, and/or besides a precedence value 461, a traffic descriptor 462 and at least one route selection descriptor (list) 463 of that user equipment route selection policy rule or rules 460, 470, 480, 490.

Besides the specific energy-related information element 441, the structure of the (specific) user equipment route selection policy information 400, 401 corresponds to the definition as in the current version of 3GPP TS 23.503, i.e. it is or corresponds to a set of one or more user equipment route selection policy rules 460, 470, 480, 490, where the or each user equipment route selection policy rule 460, 470, 480, 490 generally comprises the three parts of a precedence value, a traffic descriptor, and one or more route selection descriptors.

Regarding the user equipment 20 represented in Figures 1 and 2, it is assumed that the telecommunications network 100 might be a standalone non-public network (SNPN) and/or a public land mobile network (PLMN). The user equipment 20 comprises (or accesses) the energy-related information 22.

According to the present invention, the specific user equipment route selection policy information 401 is either received by the user equipment 20 (and transmitted by the telecommunications network 100) or, alternatively, the user equipment 20 already comprises the specific user equipment route selection policy information 401.

In any case, the specific user equipment route selection policy information 401 is evaluated (especially in view of transmitting, in uplink direction and by the user equipment 20, user plane traffic), and the specific user equipment route selection policy information 401 - comprising the specific energy-related information element 441 - is either applied or not applied, by the user equipment 20, depending on whether the specific energy-related information element 441 of the specific user equipment route selection policy information 401 corresponds to the energy-related information 22 or not.

Examples thereof include the following:
The energy-related information 22 and/or the energy-related information element 441 might relate, or indicate, e.g., energy-based criteria such as:
-- the amount of available energy or energy efficiency, e.g. battery high/low (i.e. a threshold or a range of values, or a label, regarding the amount or relative amount of the available energy of the user equipment 20 or of a device being locally connected or associated to the user equipment 20, and/or a threshold or a range of values, or a label, regarding the amount or relative amount of the energy available to a base station entity or a radio cell of the telecommunications network 100, which base station entity or radio cell is potentially able to serve the user equipment 20), e.g. whether the user equipment is using a power saving mode, whether the user equipment has activated or is and/or is capable of using power-saving features,
-- the cost of energy, which could also be the cost to the user because of energy, i.e. a surcharge to use a specific radio cell or a charging indicator, or a "cost value" or also a "cost label", e.g. "low cost", "high cost" (i.e. a threshold or a range of values, or a label, regarding energy costs, especially energy costs to the user or to the user equipment 20, especially regarding a surcharge to use a specific radio cell or being a charging indicator or a cost label),
-- the origin, e.g. a country or region, i.e. whether the (electrical) energy is locally generated - e.g. whether the energy is cooperatively shared within members in a closed group, or the nature/type of the energy, e.g. whether the energy is sustainably produced or how sustainable the energy is - (i.e. a threshold or a range of values, or a label, regarding the kind or the category of energy generation used, especially whether the energy used is generated renewably and/or whether a certain energy generation technology is used and/or whether a certain maximum threshold or a certain range of values of greenhouse gas emissions is respected.),
-- the energy intensity or efficiency of the data transmission, e.g. a quantity related to the CO₂-emissions (or equivalent CO₂-emissions) generated by using the transmission in a specific way (a threshold or a range of values or a label regarding the energy intensity of a data transmission), the (estimated) amount of energy required for a given transmission.

As such, the user equipment 20 might have a choice between different telecommunications networks or mobile communication networks and/or between different base station entities, i.e. in a real-use application of the present invention, the user equipment 20 would be able to steer (depending on the energy-related information 22 and on the specific energy-related information element 441 of the specific user equipment route selection policy information 401, and depending on whether they are matching or not) the (uplink user plane) traffic using its user equipment route selection policy rules, such that a radio cell (or mobile communication network) powered with renewable energy is used and/or a radio cell (or mobile communication network) with low battery power is avoided and/or a radio cell (or mobile communication network) with a current low energy cost/footprint is used and/or, especially in case no better match is found, a conventionally-powered radio cell (or mobile communication network) is used. Hence, according to the present invention, by means of adding energy-related criteria to the specific user equipment route selection policy information 401 (especially in the route selection descriptor of the specific user equipment route selection policy rule), it is advantageously possible that a telecommunications network (especially the home network of the user equipment 20) is able to instruct the user equipment 20 to route specific, matching traffic (it is to be understood that the traffic descriptor may not have anything to do with energy efficiency, it could just be matching a video streaming application) to only resources matching the specified criteria, e.g. a radio cell using renewable energy.

It is furthermore advantageously possible according to the present invention that an association of application traffic and user equipment route selection policy rules is possible, based on energy-related information:
Alternatively (or combined with) the route selection descriptor, it is proposed according to the present invention to incorporate energy-related information in the traffic descriptor (TD). It is possible for the application generating traffic to request certain capabilities from the network. In this case, it is proposed to extend the connection capabilities (CC) information element (IE) in the URSP rule's traffic descriptor, such that the application can indicate that it requires certain energy characteristics for the traffic to be handled.

A use case thereof is, e.g., an application as part of an end-to-end (E2E) service, in which it is a legal requirement to provide an E2E "green service". Unless radio cells powered by green energy are chosen, the service requirements would not be able to be fulfilled; in this case, the energy-related information 22 is part of (or is transmitted, or chosen, as part of) such an application, and a specific user equipment route selection policy information 401 is only applied in case that the specific energy-related information element 441 of that specific user equipment route selection policy information 401 complies with such requirement.

Hence a conditional validity of such a considered user equipment route selection policy rule (or user equipment route selection policy information) based on an energy-based criterion - i.e. depending on the energy-related information 22 and whether the specific energy-related information element 441 corresponds thereto or matches it - is implemented. Thus, it is advantageously possible, according to the present invention, that a user equipment route selection policy rule is only applied if certain energy-related conditions are met; practical examples include (but are not limited to):
-- the activation of a user equipment route selection policy rule sending traffic via a high-performance network slice (e.g., S-NSSAl/DNN) only if the access network is energy-efficient (or complies with a specific or pre-defined energy-efficiency level or range);
-- the activation of a user equipment route selection policy rule sending traffic via WiFi access if there is no energy-efficient 3GPP-based access network or if the energy level of the mobile network is low (e.g. preemptive preference of non-3GPP access to avoid a sudden PDU session failure if the radio node goes suddenly offline).

Alternatively (or combined with) the route validation descriptor, it is also possible and preferred, according to the present invention, that specific user equipment route selection policy information is only evaluated by the user equipment 20 if the user equipment 20 is operating under specific energy-related modes, especially if the user equipment 20 is operating in an energy-efficient mode.

Alternatively or cumulatively, it is also possible and preferred, according to the present invention, that an indirect association of energy-related information is realized, i.e. instead of (or in addition to) directly conveying energy-related information, the user equipment can evaluate, the user equipment is provided with an indirect mapping, which can be, e.g., sent via secure channels (as opposed to e.g. via system information block, SIB); practical examples include (but are not limited to):
-- send a mapping (information) including an association of a specific network (e.g. a public land mobile network A) to "green energy";
-- send a user equipment route selection policy rule associating a specific application (e.g. application X) to use green energy;
-- by combining the user equipment route selection policy rule contents and the separate mapping, the user equipment associates traffic of application X to public land mobile network A.

Regarding the transmission of the energy-related information 22 and/or of the specific energy-related information element 441, especially energy-related data - i.e. to deliver the energy-related information or the mapping of the energy-related information to the user equipment 20 -, several methods are possible to be used according to the present invention:
-- via the access network 110, especially the radio access network, it is considered to use SIB (e.g. cell broadcast) or access stratum signaling (AS); hence, the delivery of energy information (or energy-related information 22), to the user equipment 20, is implemented from the (radio) access network 110 to the user equipment 20;
-- from the core network (CN) 120, it is considered to send the energy-related information 22 via non-access stratum, NAS (messages), i.e. from the core network 120; in this respect, several methods and/or procedures can be employed using non-access stratum:
   -- it is possible to use an access and mobility (AM) container which is used to steer mobility-related information and is able to be used for the transmission of the mapping information (i.e. the energy-related information 22);
   -- alternatively or cumulatively, it is possible to use a closed access group (CAG) information; since this information is used for cell selection, it is proposed, according to the present invention, to incorporate energy-related in information in the CAG identifier;
   -- alternatively or cumulatively, it is possible to use a dedicated NAS message using a different (new) information element type (IE type) for the transmission of the energy-related information 22;
   -- alternatively or cumulatively, it is possible to use a user equipment configuration update (UCU) procedure, which is currently used to transmit the user equipment route selection policy rule/information;
   -- alternatively or cumulatively, it is possible to use a user equipment parameter update (UPU) procedure;
   -- alternatively or cumulatively, it is possible to use a steering of roaming (SoR) procedure; especially regarding the use of the SoR procedure, it is possible and preferred, according to the present invention, that one network steers traffic while the UE is registered in another network (e.g. when it is roaming). In this case, the (specific) energy-related information element 441 that the home network (or H-PLMN) of the user equipment 20 includes in the (specific) user equipment route selection policy rule is able to be combined with (existing) roaming-related information (i.e. the energy-related information 22), such that the user equipment 20 is able to consider all the available information also while roaming, and, especially, the user equipment 20 is able (based on an energy-related information 22 regarding a first network (e.g. a first public land mobile network) and/or an energy-related information 22 (or a further energy-related information 22) regarding a second network (e.g. a second public land mobile network) to choose, e.g., the second network over the first network based on its respective energy-related information 22 (and also based on the (specific) energy-related information element 441 of the user equipment route selection policy information or rule).

Hence, according to the present invention, it is advantageously possible to send a (specific) user equipment route selection policy rule to a user equipment 20 (by means of a mobile network), wherein the specific user equipment route selection policy rule includes or is associated to (at least one specific) energy-related information element 441 (e.g. in the traffic descriptor, route valudation and/or route descriptor), wherein the user equipment 20 uses the energy-related information element 441 and the energy-related information 22 for association of the incoming application traffic to a user equipment route selection policy rule.

The energy-related information element 441 especially corresponds to or relates to any of the following:
-- the amount of available energy,
-- energy efficiency,
-- the cost of energy,
-- the origin or the nature/type of the energy (e.g. whether it is produced renewably),
-- the energy intensity of the data transmission.

Especially, the energy-related information 22 might be provided by an application when requesting a data transmission, such that the user equipment route selection policy rule uses this information as part of the traffic descriptor, especially the energy-related information being included in the connection capabilities information element. Furthermore especially, the specific energy-related information element 441 is included in the traffic descriptor of the user equipment route selection policy rule, especially as part of the connection capabilities information element, or a new information element. Furthermore especially, the mobile network or a further mobile network provides energy-related information to the user equipment, wherein the energy-related information relates to the mobile network or the further mobile network, this especially covering the case of network A giving information about itself or about network B (and vice-versa).

Especially sending (preferably repeatedly sending, e.g. in case of updates), by the mobile network of an association between specific network(s), cells, frequencies and/or slices and the energy-related information 22 (which also relates to the case of indirectly setting energy-related information instead of directly sending it), especially via:
-- SIB broadcast (e.g. MIB/SIB1), SIB on-demand,
-- RRC signaling,
-- non-access stratum signaling, e.g. in Access and Mobility (AM) container, Steering of Roaming message, Closed Access Group (CAG) information, dedicated NAS message, a user equipment configuration update (UCU) procedure, user equipment parameter update (UPU) procedure, steering of roaming (SoR) procedure.

The (specific) energy-related information element 441 is especially included
-- in the route descriptor of the user equipment route selection policy rule, especially being related to information being received for the network, especially the (radio) access network of the mobile network or the further mobile network, especially as part of the access type preference information element or a new information element;
-- in the route selection validation criteria of the user equipment route selection policy rule, especially as part of network-related information or as a new information element.

## Claims

1. Method for transmitting and/or using a user equipment route selection policy information (400) when operating a user equipment (20) or when operating a user equipment (20) connected to a telecommunications network (100),
wherein the user equipment (20) is able to access or to obtain energy-related information (22) which is associated to networks, cells, frequencies and/or slices via mappings, and wherein the user equipment route selection policy information (400) comprises an energy-related information element,
wherein, in order to transmit and/or to use a specific user equipment route selection policy information (401), the method comprises the following steps:
-- in a first step, the user equipment (20) comprises or receives the specific user equipment route selection policy information (401) to be evaluated, wherein the specific user equipment route selection policy information (401) comprises a specific energy-related information element (441) which is part of a specific user equipment route selection policy rule,
-- in a second step, the specific user equipment route selection policy information (401) is either applied or not applied, by the user equipment (20), depending on whether the specific energy-related information element (441) of the specific user equipment route selection policy information (401) corresponds to the energy-related information (22) or not, and, if applied, the specific user equipment route selection policy rule contents are combined with the mappings.

2. Method according to claim 1, wherein - in the second step - the specific user equipment route selection policy information (401) is able to be applied in case that the specific energy-related information element (441) corresponds to the energy-related information (22) of the user equipment (20), and wherein the specific user equipment route selection policy information (401) is not applied in case that the specific energy-related information element (441) does not correspond to the energy-related information (22) of the user equipment (20).

3. Method according to one of the preceding claims, wherein the energy-related information (22) and/or the specific energy-related information element (441) relates to or indicates at least one of the following:
-- a threshold or a range of values or a label regarding the amount or relative amount of the available energy or energy efficiency of the user equipment (20) or of a device being locally connected or associated to the user equipment (20),
-- a threshold or a range of values or a label regarding the amount or relative amount of the energy available to a base station entity or a radio cell of the telecommunications network (100), which base station entity or radio cell is potentially able to serve the user equipment (20),
-- a threshold or a range of values or a label regarding energy costs, especially energy costs to the user or to the user equipment (20), especially regarding a surcharge to use a specific radio cell or being a charging indicator or a cost label,
-- a threshold or a range of values or a label regarding the energy intensity or efficiency of a data transmission,
-- a threshold or a range of values or a label regarding the kind or the category of energy generation used, especially whether the energy used is generated renewably and/or whether a certain energy generation technology is used and/or whether a certain maximum threshold or a certain range of values of greenhouse gas emissions is respected.

4. Method according to one of the preceding claims, wherein the specific user equipment route selection policy information (401) comprises the specific energy-related information element (441) according to at least one out of the following:
-- a traffic descriptor,
-- a route selection descriptor,
-- a route selection validation criteria,
-- as an energy-related information element.

5. Method according to one of the preceding claims, wherein the specific user equipment route selection policy information (401) comprises at least one specific user equipment route selection policy rule, wherein the specific energy-related information element (441) is part of the specific user equipment route selection policy rule, especially according to at least one out of the following:
-- the specific energy-related information element (441) is part of the specific user equipment route selection policy rule as part of at least one specific route selection descriptor thereof, and especially besides a precedence value, a traffic descriptor and/or at least one further route selection descriptor,
-- the specific energy-related information element (441) is part of the specific user equipment route selection policy rule as part of at least one specific traffic descriptor thereof - especially as part of the, or one of the, connection capabilities information element of the specific traffic descriptor -, and especially besides a precedence value, a route selection descriptor and/or at least one further traffic descriptor.

6. Method according to one of the preceding claims, wherein the method further comprises the step of - especially prior to or during the first step - the user equipment (20) comprising or receiving the energy-related information (22), wherein the energy-related information (22) especially comprises a mapping information,
wherein especially the energy-related information (22) is sent, to the user equipment (20), using a secure channel, especially within a non-access stratum message and/or a container within.

7. Method according to one of the preceding claims, wherein the specific energy-related information element (441) and/or the energy-related information (22) is transmitted, to the user equipment (20), using at least one out of the following mechanisms or possibilities:
-- transmission via, or using, radio cell broadcast, especially via a broadcast control channel, especially using a system information block,
-- transmission via, or using, access stratum signaling from an access network serving the user equipment (20) and/or via, or using, radio resource control signaling,
-- transmission via, or using, non-access stratum signaling from the core network of, or serving, the user equipment (20), wherein especially the transmission via, or using, non-access stratum signaling uses an access and mobility container and/or a closed access group information and/or a dedicated non-access stratum message and/or a user equipment configuration update procedure and/or a user equipment parameter update procedure and/or a steering of roaming procedure.

8. User equipment (20) for receiving and/or using a user equipment route selection policy information (400) when being operated, or when being operated in connection to a telecommunications network (100),
wherein the user equipment (20) is able to access or to obtain energy-related information (22) which is associated to networks, cells, frequencies and/or slices via mappings, and wherein the user equipment route selection policy information (400) comprises an energy-related information element,
wherein, in order to transmit and/or to use a specific user equipment route selection policy information (401), the user equipment (20) is configured such that:
-- the user equipment (20) comprises or receives the specific user equipment route selection policy information (401) to be evaluated, wherein the specific user equipment route selection policy information (401) comprises a specific energy-related information element (441), which is part of a specific user equipment route selection policy rule,
-- the specific user equipment route selection policy information (401) is either applied or not applied, by the user equipment (20), depending on whether the specific energy-related information element (441) of the specific user equipment route selection policy information (401) corresponds to the energy-related information (22) or not, and, if applied, the specific user equipment route selection policy rule contents are combined with the mappings.

9. System or telecommunications network (100) for transmitting and/or using a user equipment route selection policy information (400) when operating a user equipment (20) or when operating a user equipment (20) connected to a telecommunications network (100),
wherein the user equipment (20) is able to access or to obtain energy-related information (22) which is associated to networks, cells, frequencies and/or slices via mappings, and wherein the user equipment route selection policy information (400) comprises an energy-related information element,
wherein, in order to transmit and/or to use a specific user equipment route selection policy information (401), the system or telecommunications network (100) is configured such that:
-- the user equipment (20) comprises or receives the specific user equipment route selection policy information (401) to be evaluated, wherein the specific user equipment route selection policy information (401) comprises a specific energy-related information element (441), which is part of a specific user equipment route selection policy rule,
-- the specific user equipment route selection policy information (401) is either applied or not applied, by the user equipment (20), depending on whether the specific energy-related information element (441) of the specific user equipment route selection policy information (401) corresponds to the energy-related information (22) or not, and, if applied, the specific user equipment route selection policy rule contents are combined with the mappings.

10. Program comprising a computer readable program code which, when executed on a computer and/or on a user equipment (20) and/or on a network node of a telecommunications network (100), or in part on the user equipment (20) and/or in part on the network node of a telecommunications network (100), causes the computer and/or the user equipment (20) and/or the network node of a telecommunications network (100) to perform a method according one of claims 1 to 7.

11. Computer-readable medium comprising instructions which when executed on a computer and/or on a user equipment (20) and/or on a network node of a telecommunications network (100), or in part on the user equipment (20) and/or in part on the network node of a telecommunications network (100), causes the computer and/or the user equipment (20) and/or the network node of a telecommunications network (100) to perform a method according one of claims 1 to 7.

## Patentansprüche

1. Verfahren zur Übertragung und/oder Verwendung einer Nutzergerät-Routenauswahl-Richtlinieninformation (400) beim Betrieb eines Nutzergeräts (20) oder beim Betrieb eines Nutzergeräts (20), das mit einem Telekommunikationsnetzwerk (100) verbunden ist, wobei das Nutzergerät (20) in der Lage ist, Energie-bezogene Informationen (22) zu erreichen oder zu erhalten, die über Zuordnungen mit Netzwerken, Zellen, Frequenzen und/oder Scheiben verknüpft sind, und wobei die Nutzergerät-Routenauswahl-Richtlinieninformation (400) ein Energie-bezogenes Informationselement umfasst, wobei zur Übertragung und/oder zur Verwendung einer spezifischen Nutzergerät-Routenauswahl-Richtlinieninformation (401) das Verfahren die folgenden Schritte umfasst:
-- in einem ersten Schritt umfasst oder empfängt das Nutzergerät (20) die zu bewertende spezifische Nutzergerät-Routenauswahl-Richtlinieninformation (401), wobei die spezifische Nutzergerät-Routenauswahl-Richtlinieninformation (401) ein spezifisches Energie-bezogenes Informationselement (441) umfasst, das Teil einer spezifischen Routenauswahl-Richtlinienregel ist,
-- in einem zweiten Schritt wird die spezifische Nutzergerät-Routenauswahl-Richtlinieninformation (401) vom Nutzergerät (20) entweder angewendet oder nicht angewendet, abhängig davon, ob das spezifische Energie-bezogene Informationselement (441) der spezifischen Nutzergerät-Routenauswahl-Richtlinieninformation (401) den Energie-bezogenen Informationen (22) entspricht oder nicht, und falls angewendet, werden die Inhalte der spezifischen Routenauswahl-Richtlinienregel mit den Zuordnungen kombiniert.

2. Verfahren nach Anspruch 1, wobei - im zweiten Schritt - die spezifische Nutzergerät-Routenauswahl-Richtlinieninformation (401) angewendet werden kann, falls das spezifische Energie-bezogene Informationselement (441) den Energie-bezogenen Informationen (22) des Nutzergeräts (20) entspricht, und wobei die spezifische Nutzergerät-Routenauswahl-Richtlinieninformation (401) nicht angewendet wird, falls das spezifische Energie-bezogene Informationselement (441) nicht den Energie-bezogenen Informationen (22) des Nutzergeräts (20) entspricht.

3. Verfahren nach einem der vorhergehenden Ansprüche, wobei sich die Energie-bezogenen Informationen (22) und/oder das spezifische Energie-bezogene Informationselement (441) auf mindestens eines der folgenden bezieht oder dies anzeigt:
-- einen Schwellenwert oder einen Wertebereich oder ein Energie-Label bezüglich der Menge oder relativen Menge der verfügbaren Energie oder Energieeffizienz des Nutzergeräts (20) oder eines Geräts, das lokal mit dem Nutzergerät (20) verbunden oder verknüpft ist,
-- einen Schwellenwert oder einen Wertebereich oder ein Energie-Label bezüglich der Menge oder relativen Menge der Energie, die einer Basisstations-Entität oder einer Funkzelle des Telekommunikationsnetzwerks (100) zur Verfügung steht, welche Basisstations-Entität oder Funkzelle potenziell in der Lage ist, das Nutzergerät (20) zu bedienen,
-- einen Schwellenwert oder einen Wertebereich oder ein Kosten-Label bezüglich Energiekosten, insbesondere Energiekosten für den Benutzer oder für das Nutzergerät (20), insbesondere bezüglich eines Aufschlags für die Nutzung einer spezifischen Funkzelle oder als Abrechnungsindikator oder ein Kosten-Label,
-- einen Schwellenwert oder einen Wertebereich oder ein Label bezüglich der Energieintensität oder Effizienz einer Datenübertragung,
-- einen Schwellenwert oder einen Wertebereich oder ein Label bezüglich der Art oder der Kategorie der verwendeten Energieerzeugung, insbesondere ob die verwendete Energie erneuerbar erzeugt wird und/oder ob eine bestimmte Energieerzeugungstechnologie verwendet wird und/oder ob ein bestimmter maximaler Schwellenwert oder ein bestimmter Wertebereich von Treibhausgasemissionen eingehalten wird.

4. Verfahren nach einem der vorhergehenden Ansprüche, wobei die spezifische Nutzergerät-Routenauswahl-Richtlinieninformation (401) das spezifische Energie-bezogene Informationselement (441) nach mindestens einem der folgenden umfasst:
-- einem Verkehrsdeskriptor,
-- einem Routenauswahl-Deskriptor,
-- Routenauswahl-Validierungskriterien,
-- als Energie-bezogenes Informationselement.

5. Verfahren nach einem der vorhergehenden Ansprüche, wobei die spezifische Nutzergerät-Routenauswahl-Richtlinieninformation (401) mindestens eine spezifische Routenauswahl-Richtlinienregel umfasst, wobei das spezifische Energie-bezogene Informationselement (441) Teil der spezifischen Routenauswahl-Richtlinienregel ist, insbesondere nach mindestens einem der folgenden:
-- das spezifische Energie-bezogene Informationselement (441) ist Teil der spezifischen Routenauswahl-Richtlinienregel als Teil mindestens eines spezifischen Routenauswahl-Deskriptors davon, und insbesondere neben einem Prioritätswert, einem Verkehrsdeskriptor und/oder mindestens einem weiteren Routenauswahl-Deskriptor,
-- das spezifische Energie-bezogene Informationselement (441) ist Teil der spezifischen Routenauswahl-Richtlinienregel als Teil mindestens eines spezifischen Verkehrsdeskriptors davon - insbesondere als Teil des oder eines der Verbindungsfähigkeiten-Informationselemente des spezifischen Verkehrsdeskriptors -, und insbesondere neben einem Prioritätswert, einem Routenauswahl-Deskriptor und/oder mindestens einem weiteren Verkehrsdeskriptor.

6. Verfahren nach einem der vorhergehenden Ansprüche, wobei das Verfahren weiter den Schritt umfasst - insbesondere vor oder während des ersten Schritts - dass das Nutzergerät (20) die Energie-bezogenen Informationen (22) umfasst oder empfängt, wobei die Energie-bezogenen Informationen (22) insbesondere eine Zuordnungsinformation umfassen, wobei insbesondere die Energie-bezogenen Informationen (22) an das Nutzergerät (20) unter Verwendung eines sicheren Kanals gesendet werden, insbesondere innerhalb einer Nicht-Zugangsschicht-Nachricht und/oder eines Containers darin.

7. Verfahren nach einem der vorhergehenden Ansprüche, wobei das spezifische Energie-bezogene Informationselement (441) und/oder die Energie-bezogenen Informationen (22) an das Nutzergerät (20) unter Verwendung mindestens eines der folgenden Mechanismen oder Möglichkeiten übertragen werden:
-- Übertragung über oder unter Verwendung von Funkzellen-Rundfunk, insbesondere über einen Rundfunk-Steuerkanal, insbesondere unter Verwendung eines Systeminformationsblocks,
-- Übertragung über oder unter Verwendung von Zugangsschicht-Signalisierung von einem Zugangsnetzwerk, das das Nutzergerät (20) bedient, und/oder über oder unter Verwendung von Funkressourcensteuerungs-Signalisierung,
-- Übertragung über oder unter Verwendung von Nicht-Zugangsschicht-Signalisierung vom Kernnetzwerk des oder das Nutzergerät (20) bedient, wobei insbesondere die Übertragung über oder unter Verwendung von Nicht-Zugangsschicht-Signalisierung einen Zugang-und-Mobilität-Container und/oder eine Geschlossene-Zugriffsgruppe-Information und/oder eine dedizierte Nicht-Zugangsschicht-Nachricht und/oder ein Nutzergerät-Konfigurationsupdate-Verfahren und/oder ein Nutzergerät-Parameter-Update-Verfahren und/oder ein Roaming-Steuerungsverfahren verwendet.

8. Nutzergerät (20) zum Empfangen und/oder Verwenden einer Nutzergerät-Routenauswahl-Richtlinieninformation (400) beim Betrieb oder beim Betrieb in Verbindung mit einem Telekommunikationsnetzwerk (100), wobei das Nutzergerät (20) in der Lage ist, Energie-bezogene Informationen (22) zu erreichen oder zu erhalten, die über Zuordnungen mit Netzwerken, Zellen, Frequenzen und/oder Scheiben verknüpft sind, und wobei die Nutzergerät-Routenauswahl-Richtlinieninformation (400) ein Energie-bezogenes Informationselement umfasst, wobei zur Übertragung und/oder zur Verwendung einer spezifischen Nutzergerät-Routenauswahl-Richtlinieninformation (401) das Nutzergerät (20) so konfiguriert ist, dass:
-- das Nutzergerät (20) die zu bewertende spezifische Nutzergerät-Routenauswahl-Richtlinieninformation (401) umfasst oder empfängt, wobei die spezifische Nutzergerät-Routenauswahl-Richtlinieninformation (401) ein spezifisches Energie-bezogenes Informationselement (441) umfasst, das Teil einer spezifischen Routenauswahl-Richtlinienregel ist,
-- die spezifische Nutzergerät-Routenauswahl-Richtlinieninformation (401) vom Nutzergerät (20) entweder angewendet oder nicht angewendet wird, abhängig davon, ob das spezifische Energie-bezogene Informationselement (441) der spezifischen Nutzergerät-Routenauswahl-Richtlinieninformation (401) den Energie-bezogenen Informationen (22) entspricht oder nicht, und, falls angewendet, werden die Inhalte der spezifischen Routenauswahl-Richtlinienregel mit den Zuordnungen kombiniert.

9. System oder Telekommunikationsnetzwerk (100) zur Übertragung und/oder Verwendung einer Nutzergerät-Routenauswahl-Richtlinieninformation (400) beim Betrieb eines Nutzergeräts (20) oder beim Betrieb eines Nutzergeräts (20), das mit einem Telekommunikationsnetzwerk (100) verbunden ist, wobei das Nutzergerät (20) in der Lage ist, Energie-bezogene Informationen (22) zu erreichen oder zu erhalten, die über Zuordnungen mit Netzwerken, Zellen, Frequenzen und/oder Scheiben verknüpft sind, und wobei die Nutzergerät-Routenauswahl-Richtlinieninformation (400) ein Energie-bezogenes Informationselement umfasst, wobei zur Übertragung und/oder zur Verwendung einer spezifischen Nutzergerät-Routenauswahl-Richtlinieninformation (401) das System oder Telekommunikationsnetzwerk (100) so konfiguriert ist, dass:
-- das Nutzergerät (20) die zu bewertende spezifische Nutzergerät-Routenauswahl-Richtlinieninformation (401) umfasst oder empfängt, wobei die spezifische Nutzergerät-Routenauswahl-Richtlinieninformation (401) ein spezifisches Energie-bezogenes Informationselement (441) umfasst, das Teil einer spezifischen Routenauswahl-Richtlinienregel ist,
-- die spezifische Nutzergerät-Routenauswahl-Richtlinieninformation (401) vom Nutzergerät (20) entweder angewendet oder nicht angewendet wird, abhängig davon, ob das spezifische Energie-bezogene Informationselement (441) der spezifischen Nutzergerät-Routenauswahl-Richtlinieninformation (401) den Energie-bezogenen Informationen (22) entspricht oder nicht, und falls angewendet, werden die Inhalte der spezifischen Routenauswahl-Richtlinienregel mit den Zuordnungen kombiniert.

10. Programm, umfassend einen computerlesbaren Programmcode, der, wenn er auf einem Computer und/oder auf einem Nutzergerät (20) und/oder auf einem Netzwerkknoten eines Telekommunikationsnetzwerks (100) oder teilweise auf dem Nutzergerät (20) und/oder teilweise auf dem Netzwerkknoten eines Telekommunikationsnetzwerks (100) ausgeführt wird, den Computer und/oder das Nutzergerät (20) und/oder den Netzwerkknoten eines Telekommunikationsnetzwerks (100) veranlasst, ein Verfahren nach einem der Ansprüche 1 bis 7 durchzuführen.

11. Computerlesbares Medium, umfassend Anweisungen, die, wenn sie auf einem Computer und/oder auf einem Nutzergerät (20) und/oder auf einem Netzwerkknoten eines Telekommunikationsnetzwerks (100) oder teilweise auf dem Nutzergerät (20) und/oder teilweise auf dem Netzwerkknoten eines Telekommunikationsnetzwerks (100) ausgeführt werden, den Computer und/oder das Nutzergerät (20) und/oder den Netzwerkknoten eines Telekommunikationsnetzwerks (100) veranlassen, ein Verfahren nach einem der Ansprüche 1 bis 7 durchzuführen.

## Revendications

1. Procédé pour transmettre et/ou utiliser une information de politique de sélection de route d'équipement utilisateur (400) lors du fonctionnement d'un équipement utilisateur (20) ou lors du fonctionnement d'un équipement utilisateur (20) connecté à un réseau de télécommunications (100), dans lequel l'équipement utilisateur (20) est capable d'accéder ou d'obtenir des informations liées à l'énergie (22) qui sont associées aux réseaux, cellules, fréquences et/ou tranches via des mappages, et dans lequel l'information de politique de sélection de route d'équipement utilisateur (400) comprend un élément d'information lié à l'énergie, dans lequel, afin de transmettre et/ou d'utiliser une information de politique de sélection de route d'équipement utilisateur spécifique (401), le procédé comprend les étapes suivantes :
-- dans une première étape, l'équipement utilisateur (20) comprend ou reçoit l'information de politique de sélection de route d'équipement utilisateur spécifique (401) à évaluer, dans lequel l'information de politique de sélection de route d'équipement utilisateur spécifique (401) comprend un élément d'information lié à l'énergie spécifique (441) qui fait partie d'une règle de politique de sélection de route spécifique,
-- dans une seconde étape, l'information de politique de sélection de route d'équipement utilisateur spécifique (401) est soit appliquée soit non appliquée par l'équipement utilisateur (20), selon que l'élément d'information lié à l'énergie spécifique (441) de l'information de politique de sélection de route d'équipement utilisateur spécifique (401) correspond aux informations liées à l'énergie (22) ou non, et, si appliqué, les contenus de la règle de politique de sélection de route spécifique sont combinés avec les mappages.

2. Procédé selon la revendication 1, dans lequel - dans la seconde étape - l'information de politique de sélection de route d'équipement utilisateur spécifique (401) peut être appliquée dans le cas où l'élément d'information lié à l'énergie spécifique (441) correspond aux informations liées à l'énergie (22) de l'équipement utilisateur (20), et dans lequel l'information de politique de sélection de route d'équipement utilisateur spécifique (401) n'est pas appliquée dans le cas où l'élément d'information lié à l'énergie spécifique (441) ne correspond pas aux informations liées à l'énergie (22) de l'équipement utilisateur (20).

3. Procédé selon l'une des revendications précédentes, dans lequel les informations liées à l'énergie (22) et/ou l'élément d'information lié à l'énergie spécifique (441) se rapportent à ou indiquent au moins un des éléments suivants :
-- un seuil ou une plage de valeurs ou une étiquette énergétique concernant la quantité ou quantité relative d'énergie disponible ou d'efficacité énergétique de l'équipement utilisateur (20) ou d'un dispositif étant localement connecté ou associé à l'équipement utilisateur (20),
-- un seuil ou une plage de valeurs ou une étiquette énergétique concernant la quantité ou quantité relative d'énergie disponible pour une entité de station de base ou une cellule radio du réseau de télécommunications (100), laquelle entité de station de base ou cellule radio est potentiellement capable de servir l'équipement utilisateur (20),
-- un seuil ou une plage de valeurs ou une étiquette de coût concernant les coûts énergétiques, spécialement les coûts énergétiques pour l'utilisateur ou pour l'équipement utilisateur (20), spécialement concernant une surtaxe pour utiliser une cellule radio spécifique ou étant un indicateur de facturation ou une étiquette de coût,
-- un seuil ou une plage de valeurs ou une étiquette concernant l'intensité énergétique ou l'efficacité d'une transmission de données,
-- un seuil ou une plage de valeurs ou une étiquette concernant le type ou la catégorie de génération d'énergie utilisée, spécialement si l'énergie utilisée est générée de manière renouvelable et/ou si une certaine technologie de production d'énergie est utilisée et/ou si un certain seuil maximum ou une certaine plage de valeurs d'émissions de gaz à effet de serre est respecté.

4. Procédé selon l'une des revendications précédentes, dans lequel l'information de politique de sélection de route d'équipement utilisateur spécifique (401) comprend l'élément d'information lié à l'énergie spécifique (441) selon au moins un des éléments suivants :
-- un descripteur de trafic,
-- un descripteur de sélection de route,
-- des critères de validation de sélection de route, comme un élément d'information lié à l'énergie.

5. Procédé selon l'une des revendications précédentes, dans lequel l'information de politique de sélection de route d'équipement utilisateur spécifique (401) comprend au moins une règle de politique de sélection de route spécifique, dans lequel l'élément d'information lié à l'énergie spécifique (441) fait partie de la règle de politique de sélection de route spécifique, spécialement selon au moins un des éléments suivants :
-- l'élément d'information lié à l'énergie spécifique (441) fait partie de la règle de politique de sélection de route spécifique comme partie d'au moins un descripteur de sélection de route spécifique de celle-ci, et spécialement outre une valeur de priorité, un descripteur de trafic et/ou au moins un autre descripteur de sélection de route,
-- l'élément d'information lié à l'énergie spécifique (441) fait partie de la règle de politique de sélection de route spécifique comme partie d'au moins un descripteur de trafic spécifique de celle-ci - spécialement comme partie de l'élément d'information des capacités de connexion ou l'un des éléments d'information des capacités de connexion du descripteur de trafic spécifique -, et spécialement outre une valeur de priorité, un descripteur de sélection de route et/ou au moins un autre descripteur de trafic.

6. Procédé selon l'une des revendications précédentes, dans lequel le procédé comprend en outre l'étape - spécialement avant ou pendant la première étape - que l'équipement utilisateur (20) comprenne ou reçoive les informations liées à l'énergie (22), dans lequel les informations liées à l'énergie (22) comprennent spécialement une information de mappage, dans lequel spécialement les informations liées à l'énergie (22) sont envoyées à l'équipement utilisateur (20) en utilisant un canal sécurisé, spécialement dans un message de strate de non-accès et/ou un conteneur à l'intérieur.

7. Procédé selon l'une des revendications précédentes, dans lequel l'élément d'information lié à l'énergie spécifique (441) et/ou les informations liées à l'énergie (22) sont transmis à l'équipement utilisateur (20) en utilisant au moins un des mécanismes ou possibilités suivants :
-- transmission via ou en utilisant la diffusion de cellules radio, spécialement via un canal de contrôle de diffusion, spécialement en utilisant un bloc d'information système,
-- transmission via ou en utilisant une signalisation de strate d'accès d'un réseau d'accès servant l'équipement utilisateur (20) et/ou via ou en utilisant une signalisation de contrôle des ressources radio,
-- transmission via ou en utilisant une signalisation de strate de non-accès du réseau coeur de ou servant l'équipement utilisateur (20), dans lequel spécialement la transmission via ou en utilisant une signalisation de strate de non-accès utilise un conteneur d'accès et de mobilité et/ou une information de groupe d'accès fermé et/ou un message de strate de non-accès dédié et/ou une procédure de mise à jour de configuration d'équipement utilisateur et/ou une procédure de mise à jour des paramètres d'équipement utilisateur et/ou une procédure de pilotage d'itinérance.

8. Équipement utilisateur (20) pour recevoir et/ou utiliser une information de politique de sélection de route d'équipement utilisateur (400) lors de son fonctionnement ou lors de son fonctionnement en connexion avec un réseau de télécommunications (100), dans lequel l'équipement utilisateur (20) est capable d'accéder ou d'obtenir des informations liées à l'énergie (22) qui sont associées aux réseaux, cellules, fréquences et/ou tranches via des mappages, et dans lequel l'information de politique de sélection de route d'équipement utilisateur (400) comprend un élément d'information lié à l'énergie, dans lequel, afin de transmettre et/ou d'utiliser une information de politique de sélection de route d'équipement utilisateur spécifique (401), l'équipement utilisateur (20) est configuré de telle sorte que :
-- l'équipement utilisateur (20) comprenne ou reçoive l'information de politique de sélection de route d'équipement utilisateur spécifique (401) à évaluer, dans lequel l'information de politique de sélection de route d'équipement utilisateur spécifique (401) comprend un élément d'information lié à l'énergie spécifique (441) qui fait partie d'une règle de politique de sélection de route spécifique,
-- l'information de politique de sélection de route d'équipement utilisateur spécifique (401) soit appliquée ou non appliquée par l'équipement utilisateur (20), selon que l'élément d'information lié à l'énergie spécifique (441) de l'information de politique de sélection de route d'équipement utilisateur spécifique (401) corresponde aux informations liées à l'énergie (22) ou non, et, si appliqué, les contenus de la règle de politique de sélection de route spécifique sont combinés avec les mappages.

9. Système ou réseau de télécommunications (100) pour transmettre et/ou utiliser une information de politique de sélection de route d'équipement utilisateur (400) lors du fonctionnement d'un équipement utilisateur (20) ou lors du fonctionnement d'un équipement utilisateur (20) connecté à un réseau de télécommunications (100), dans lequel l'équipement utilisateur (20) est capable d'accéder ou d'obtenir des informations liées à l'énergie (22) qui sont associées aux réseaux, cellules, fréquences et/ou tranches via des mappages, et dans lequel l'information de politique de sélection de route d'équipement utilisateur (400) comprend un élément d'information lié à l'énergie, dans lequel, afin de transmettre et/ou d'utiliser une information de politique de sélection de route d'équipement utilisateur spécifique (401), le système ou réseau de télécommunications (100) est configuré de telle sorte que :
-- l'équipement utilisateur (20) comprenne ou reçoive l'information de politique de sélection de route d'équipement utilisateur spécifique (401) à évaluer, dans lequel l'information de politique de sélection de route d'équipement utilisateur spécifique (401) comprend un élément d'information lié à l'énergie spécifique (441) qui fait partie d'une règle de politique de sélection de route spécifique,
-- l'information de politique de sélection de route d'équipement utilisateur spécifique (401) soit appliquée ou non appliquée par l'équipement utilisateur (20), selon que l'élément d'information lié à l'énergie spécifique (441) de l'information de politique de sélection de route d'équipement utilisateur spécifique (401) corresponde aux informations liées à l'énergie (22) ou non, et, si appliqué, les contenus de la règle de politique de sélection de route spécifique sont combinés avec les mappages.

10. Programme comprenant un code de programme lisible par ordinateur qui, lorsqu'il est exécuté sur un ordinateur et/ou sur un équipement utilisateur (20) et/ou sur un nœud de réseau d'un réseau de télécommunications (100), ou en partie sur l'équipement utilisateur (20) et/ou en partie sur le nœud de réseau d'un réseau de télécommunications (100), fait que l'ordinateur et/ou l'équipement utilisateur (20) et/ou le nœud de réseau d'un réseau de télécommunications (100) exécute un procédé selon l'une des revendications 1 à 7.

11. Support lisible par ordinateur comprenant des instructions qui, lorsqu'elles sont exécutées sur un ordinateur et/ou sur un équipement utilisateur (20) et/ou sur un nœud de réseau d'un réseau de télécommunications (100), ou en partie sur l'équipement utilisateur (20) et/ou en partie sur le nœud de réseau d'un réseau de télécommunications (100), font que l'ordinateur et/ou l'équipement utilisateur (20) et/ou le nœud de réseau d'un réseau de télécommunications (100) exécute un procédé selon l'une des revendications 1 à 7.
